# EUROPEAN PATENT APPLICATION

(11) **EP 4 806 976 A1**
(43) Date of publication of application: **16.09.2026**
(21) Application number: 24889122.8
(22) Date of filing: 06.11.2024
(51) Int. Cl.: C09K 11/02, C09K 11/88, C09K 11/56, C09K 11/70, G02B 5/23

(54) **QUANTUM DOT, METHOD FOR PRODUCING QUANTUM DOT, COMPOSITION COMPRISING QUANTUM DOT, AND ELECTRONIC DEVICE**

(30) Priority: 10.11.2023 KR 20230155714
(71) Applicant: Samsung Display Co., Ltd., Yongin-si, Gyeonggi-do 17113 (KR)
(72) Inventor: PAK, Ka Won, Yongin-si Gyeonggi-do 17113 (KR); KIM, Sung Jae, Yongin-si Gyeonggi-do 17113 (KR); KIM, Young Sik, Yongin-si Gyeonggi-do 17113 (KR); YOON, Bit Na, Yongin-si Gyeonggi-do 17113 (KR); LEE, Dong Hee, Yongin-si Gyeonggi-do 17113 (KR); JUNG, June Hyuk, Yongin-si Gyeonggi-do 17113 (KR)
(74) Representative: Marks & Clerk LLP
(86) International application number: PCT/KR2024/017420
(87) International publication number: WO 2025/100936

(57) **Abstract**

Provided are a quantum dot including a nanoparticle and
a heterofunctional ligand bonded to the surface of the nanoparticle and represented by Formula 1, a method of preparing the quantum dot, a composition including the quantum dot, and an electronic device including the quantum dot:

Formula 1 M₁(X₁)(R₁)

wherein, in Formula 1,
M₁ is a metal cation,
X₁ is a halide ion, and
R₁ is a hydrophilic group having 11 or more carbon atoms.

## Description

### Technical Field

One or more embodiments relate to quantum dots, methods of preparing quantum dots, and compositions and electronic devices including the quantum dots.

### Background Art

Quantum dots are nano crystals of a semiconductor material and are materials that exhibit a quantum confinement effect. When quantum dots receive light from an excitation source and reach an energy excited state, they emit energy according to the corresponding energy band gap. In this regard, even in the case of the same material, the wavelength varies depending on particle size. Accordingly, by adjusting the size of the quantum dots, light in a desired wavelength range can be obtained and excellent color purity and high luminescence efficiency can be obtained. Therefore, they can be applied to various devices or devices.

### Disclosure of Invention

### Technical Problem

One or more embodiments include quantum dots with excellent chemical stability, photoluminescence properties, and dispersibility in hydrophilic solvents, a method of preparing the same, and a composition and an electronic device including the same.

### Solution to Problem

According to an aspect, provided is a quantum dot including a nanoparticle and a heterofunctional ligand bound to the surface of the nanoparticle and represented by Formula 1:

Formula 1 M₁(X₁)(R₁)

wherein, in Formula 1,
M₁ may be a metal cation,
X₁ may be a halide ion, and
R₁ may be a hydrophilic group having 11 or more carbon atoms.

According to another aspect, provided is a method of preparing quantum dots including adding a heterofunctional ligand represented by Formula 1 to a solution including nanoparticles:

Formula 1 M₁(X₁)(R₁)

wherein, in Formula 1,
M₁ is a metal cation,
X₁ is a halogen ion,
R₁ is a hydrophilic group having 11 or more carbon atoms.

According to another aspect, provided is a quantum dot composition including the quantum dot.

According to another aspect, provided is an electronic device including the quantum dot.

### Advantageous Effects of Invention

Quantum dots according to an embodiment have excellent chemical stability and photoluminescence properties due to the decrease in surface defects due to substitution of ligands. In addition, in the case of such quantum dots, aggregation between nanoparticles may be prevented and thus, dispersibility in hydrophilic solvents is excellent. Accordingly, the quantum dots are suitable for application to ink compositions.

Accordingly, by using such quantum dots and/or methods of preparing the quantum dots, high-quality electronic devices can be provided.

### Brief Description of Drawings

FIG. 1 shows a diagram showing a quantum dot according to an embodiment.
FIG. 2 shows a diagram schematically showing the structure of an electronic device according to an embodiment.
FIG. 3 shows a diagram schematically showing the structure of an electronic device according to an embodiment.

### Mode for the Invention

As the present disclosure allows for various changes and numerous embodiments, embodiments will be illustrated in the drawings and described in detail in the written description. The effects and features of the present disclosure and methods of accomplishing the same will become apparent from the following description of the embodiments in detail, taken in conjunction with the accompanying drawings. The present disclosure may, however, be embodied in many different forms and should not be construed as limited to the embodiments set forth herein.

As used herein, the terms "first", "second", and the like do not have limited meaning but are used for the purpose of distinguishing one component from another component.

As used herein, singular expressions include plural expressions as well, unless the context clearly indicates otherwise.

It will be understood that the terms such as "including," "comprising," and "having" used herein specify the presence of stated features or components, but do not preclude the presence or addition of one or more other features or components. For example, unless otherwise defined, the terms such as "including," "comprising," and "having" may mean both a case of including only the features or components described in the specification and a case of further including other components.

As used herein, "Group II elements may include Group IIA elements and Group IIB elements in the International Union of Pure and Applied Chemistry ("IUPAC") periodic table, and examples of the Group II elements may include zinc (Zn), cadmium (Cd), mercury (Hg), and copernicium (Cn), but one or more embodiments are not limited thereto.

As used herein, "Group III elements" may include Group IIIA elements and Group IIIB elements in the IUPAC periodic table, and examples of the Group III elements may include aluminium (Al), indium (In), gallium (Ga), thallium (TI), and nihonium (Nh), but one or more embodiments are not limited thereto.

As used herein, "Group V elements" may include Group VA elements and Group VB elements in the IUPAC periodic table, and examples of the Group V elements may include nitrogen (N), phosphorus (P), and arsenic (As), but one or more embodiments are not limited thereto.

As used herein, "Group VI elements" may include Group VIA elements and Group VIB elements in the IUPAC periodic table, and examples of the Group VI elements may include oxygen (O), sulfur (S), selenium (Se), and tellurium (Te), but one or more embodiments are not limited thereto.

### [Quantum dot]

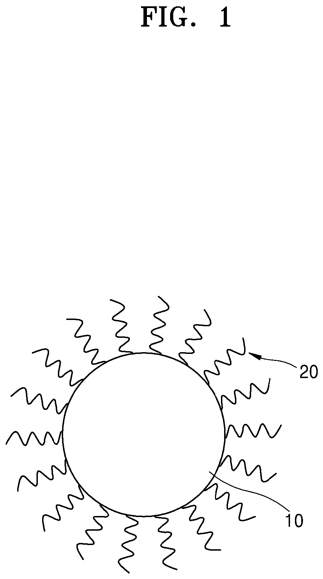

Referring to FIG. 1, a quantum dot according to an embodiment includes a nanoparticle 10 and
a heterofunctional ligand 20 which is bonded to the surface of the nanoparticle 10 and represented by Formula 1:

   Formula 1 M₁(X₁)(R₁)
wherein, in Formula 1,
   M₁ is a metal,
   X₁ is halogen,
   R₁ is a hydrophilic group having 11 or more carbon atoms.

A quantum dot according to an embodiment includes a heterofunctional ligand bonded to the surface of a nanoparticle, and accordingly, surface defects due to substitution of ligands can be reduced.

Typically, in the synthesis step of quantum dots, a non-coordinate solvent having a high boiling point and a hydrophobic ligand are used. For the subsequent process, quantum dots need to be used in the form of an ink composition. To the end, ligand exchange is needed to replace the hydrophobic ligand with a hydrophilic ligand. Conventionally, during this process, part of the surface of the nanoparticle, is torn off together with the hydrophobic ligand, creating permanent defects on the surface of the quantum dot, resulting in a loss of quantum yield of the quantum dot, and a charge is generated on the surface defect and thus quantum dots aggregate and dispersibility thereof is reduced. In addition, in the case of quantum dots having relatively small average sizes, for example, CIGS (Cu-In-Ga-S) quantum dots, quantum yield loss and dispersibility deterioration occur significantly.

Quantum dots according to embodiments have a structure in which a heterofunctional ligand is bonded to the surface of a nanoparticle and thus, steric hindrance during the ligand exchange process is reduced so that the surface of the quantum dot can be effectively modified without surface defects. As the heterofunctional ligand includes R₁, which is a hydrophilic group having 11 or more carbon atoms, dispersibility thereof in hydrophilic solvents can be improved.

Therefore, quantum dots according to embodiments have excellent chemical stability and photoluminescence properties, and have excellent dispersibility in solvents. Accordingly, such quantum dots are suitable for application to ink compositions. Additionally, by using such quantum dots and/or methods of preparing the quantum dots, high-quality electronic devices can be provided.

According to an embodiment, M₁ may be a cation of Zn, Cu, In, Ga, Cr, Mn, Fe, Co, Ni, Mg, Ca, Sc, Sn, Ti, V, Sr, Y, Zr, Nb, Mo, Cd, Ba, Au, Hg, Tl, or a combination thereof.

According to an embodiment, M₁ may be a cation of a Group II element.

According to an embodiment, M₁ may be Zn2+.

According to an embodiment, X₁ may be F-, Cl-, Br- or I-.

According to an embodiment, X₁ may be Cl⁻ or Br⁻.

According to an embodiment, R₁ may be a hydrophilic group having 11 to 50 carbon atoms. For example, R₁ may be a hydrophilic group having 11 to 30 carbon atoms, or 11 to 20 carbon atoms.

According to an embodiment, R₁ may be a group represented by Formula 11 below:

Formula 11 *-L₁-(R₁₁)ₙ₁-T₁

wherein, in Formula 11,
L₁ may be a linking group,
R₁₁ may be a hydrophilic unit,
n1 may be an integer selected from 1 to 1,000,
T₁ may be a terminal group,
* indicates the binding site to M₁ in Formula 1.

According to an embodiment, L₁ may be a single bond, an ester group (-COO-), a carbonyl group (-CO-), an amide group (-C(=O)N-), an ether group (-O-), a sulfide group (-S-), a sulfoxide group (-SO-), a sulfonyl group (-SO₂-), or a combination thereof.

According to an embodiment, R₁₁ may include at least one of a repeating unit represented by Formula 11-1 and a repeating unit represented by Formula 11-2. 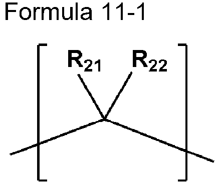 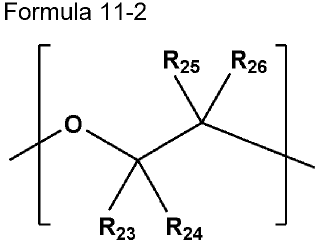 wherein, in Formulae 11-1 and 11-2,
R₂₁ to R₂₆ may each independently be hydrogen, deuterium, -F, -Cl, -Br, -I, a hydroxy group, a substituted or unsubstituted C₁-C₆₀ alkyl group, a substituted or unsubstituted C₂-C₆₀ alkenyl group, a substituted or unsubstituted C₂-C₆₀ alkynyl group, a substituted or unsubstituted C₁-C₆₀ alkoxy group, a substituted or unsubstituted C₃-C₁₀ cycloalkyl group, a substituted or unsubstituted C₁-C₁₀ heterocycloalkyl group, a substituted or unsubstituted C₃-C₁₀ cycloalkenyl group, a substituted or unsubstituted C₁-C₁₀ heterocycloalkenyl group, a substituted or unsubstituted C₆-C₆₀ aryl group, a substituted or unsubstituted C₆-C₆₀ aryloxy group, a substituted or unsubstituted C₆-C₆₀ arylthio group, a substituted or unsubstituted C₁-C₆₀ heteroaryl group, a substituted or unsubstituted C₁-C₆₀ heteroaryloxy group, a substituted or unsubstituted C₁-C₆₀ heteroarylthio group, a substituted or unsubstituted monovalent non-aromatic condensed polycyclic group, or a substituted or unsubstituted monovalent non-aromatic heterocondensed polycyclic group.

According to an embodiment, R₂₁ to R₂₆ may each independently be:
hydrogen, deuterium, -F, -Cl, -Br, -I, hydroxy group, a C₁-C₆₀ alkyl group, a C₁-C₆₀ alkoxy group, a C₆-C₆₀ aryl group, or a C₁-C₆₀ heteroaryl group; or
a C₁-C₆₀ alkyl group, a C₁-C₆₀ alkoxy group, a C₆-C₆₀ aryl group, or a C₁-C₆₀ heteroaryl group, each unsubstituted or substituted with deuterium, -F, -Cl, -Br, -I, a hydroxy group, a C₁-C₆₀ alkyl group, a C₁-C₆₀ alkoxy group, a C₆-C₆₀ aryl group, or a C₁-C₆₀ heteroaryl group.

According to an embodiment, T₁ may be hydrogen, deuterium, -OR₃₁, -COOR₃₁, - N(R₃₁)(R₃₂), -S(R₃₁), or a C₁-C₂₀ alkyl group, and
R₃₁ and R₃₂ may independently be hydrogen, deuterium, or a C₁-C₂₀ alkyl group.

According to an embodiment, the heterofunctional ligand represented by Formula 1 may be represented by Formula 21: 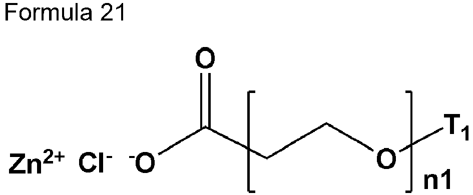 wherein, in Formula 21,
T₁ may be hydrogen, deuterium, -OR₃₁, -COOR₃₁, -N(R₃₁)(R₃₂), -S(R₃₁), or a C₁-C₂₀ alkyl group,
R₃₁ and R₃₂ may independently be hydrogen, deuterium, or a C₁-C₂₀ alkyl group, and
n1 may be an integer from 5 to 1,000.

According to an embodiment, the heterofunctional ligand represented by Formula 1 may be electrically neutral.

According to an embodiment, the nanoparticle may include a core.

According to an embodiment, the core may include a Group II-VI compound, a Group III-VI compound, a Group III-V compound, a Group IV-VI compound, a Group IV element or compound, a Group I-III-VI compound, or a combination thereof.

The Group II-VI compound may be selected from: a binary compound selected from CdS, CdSe, CdTe, ZnS, ZnSe, ZnTe, ZnO, HgS, HgSe, HgTe, MgSe, MgS, and a combination thereof; a ternary compound selected from CdSeS, CdSeTe, CdSTe, ZnSeS, ZnSeTe, ZnSTe, HgSeS, HgSeTe, HgSTe, CdZnS, CdZnSe, CdZnTe, CdHgS, CdHgSe, CdHgTe, HgZnS, HgZnSe, HgZnTe, MgZnSe, MgZnS, a combination thereof; and a quaternary compound selected from CdZnSeS, CdZnSeTe, CdZnSTe, CdHgSeS, CdHgSeTe, CdHgSTe, HgZnSeS, HgZnSeTe, HgZnSTe, and a combination thereof.

The Group III-VI compounds may include: a binary compound, such as In₂S₃ or In₂Se₃; a ternary compound, such as InGaS₃ or InGaSe₃; or a combination thereof.

For example, the Group III-V compound may be selected from: a binary compound selected from GaN, GaP, GaAs, GaSb, AlN, AlP, AlAs, AlSb, InN, InP, InAs, InSb, and a combination thereof; a ternary compound selected from GaNP, GaNAs, GaNSb, GaPAs, GaPSb, AlNP, AlNAs, AlNSb, AlPAs, AlPSb, InGaP, InAlP, InNP, InNAs, InNSb, InPAs, InPSb, GaAlNP, and a combination thereof; and a quaternary compound selected from GaAlNAs, GaAlNSb, GaAlPAs, GaAlPSb, GaInNP, GaInNAs, GaInNSb, GaInPAs, GaInPSb, InAlNP, InAlNAs, InAlNSb, InAlPAs, InAlPSb, and a combination thereof. The Group III-V semiconductor compound may further include Group II metal (for example, InZnP, etc.).

The Group IV-VI compound may be selected from: a binary compound selected from SnS, SnSe, SnTe, PbS, PbSe, PbTe, and a combination thereof; a ternary compound selected from SnSeS, SnSeTe, SnSTe, PbSeS, PbSeTe, PbSTe, SnPbS, SnPbSe, SnPbTe, and a combination thereof; and a quaternary compound selected from SnPbSSe, SnPbSeTe, SnPbSTe, and a combination thereof.

The Group IV element may be selected from Si, Ge, and a combination thereof. The Group IV compound may be a binary compound selected from SiC, SiGe, and a combination thereof.

The Group I-III-VI compound may be a ternary compound, such as AgInS, AgInS₂, CuInS, CuInS₂, CuGaO₂, AgGaO₂, AgAlO₂, etc., or a combination thereof.

The binary compound, the ternary compound, or the quaternary compound may exist in particles at uniform concentration, or may exist in the same particle while the binary compound, the ternary compound, and the quaternary compound have different concentration distributions

According to an embodiment, the core may include a Group I-III-VI compound.

According to an embodiment, Group I-III-VI compound may be represented by Formula 101:

Formula 101 (M₁₁)ₐ₁₁(M₁₂)ₐ₁₂(M₁₃)ₐ₁₃(M₁₄)₂

wherein, in Formula 101,
M₁₁ may be a Group I element,
M₁₂ and M₁₃ may each independently be a Group III element,
M₁₄ may be a Group VI element,
a11, a12 and a13 may each independently a real number from 0 to 1, and
the sum of a12 and a13 may be a real number between 0 and 1.

According to an embodiment, M₁₁ may be Cu, M₁₂ may be In, M₁₃ may be Ga, and M₁₄ may be O, S, or Se.

According to an embodiment, the nanoparticle may further include a shell which covers at least a portion of the core. In this case, the nanoparticle may have a core/shell structure. An interface between the core and the shell may have a concentration gradient in which the concentration of an element present in the shell decreases toward the core.

According to an embodiment, the first shell may include a Group II-VI compound, a Group III-VI compound, a Group III-VI compound, a Group II-III-VI compound, or a combination thereof.

Examples of the Group III-VI compound are a binary compound such as InS, InS₂, InS, InS₂, GaO₂, GaS₂, or AlO₂; or a combination thereof.

Examples of the Group II-III-VI compound are: a ternary compound, such as CdGaS, CdGaSe, CdGa₂Se₃, CdGaTe, CdInS, CdInSe, CdIn₂S₃, CdIn₂Se₃, CdInTe, ZnGaS, ZnGaSe, ZnGa₂Se₃, ZnGaTe, ZnInS, ZnInSe, ZnIn₂S₃, ZnIn₂Se₃, ZnInTe, HgGaS, HgGaSe, HgGa₂Se₃, HgGaTe, HgInS, HgInSe, HgIn₂S₃, HgIn₂Se₃, or HgInTe; a quaternary compound, such as CdInGaS₃, CdInGaSe₃, ZnInGaS₃, ZnInGaSe₃, HgInGaS₃, or HgInGaSe₃; or a combination thereof.

According to an embodiment, the first shell may include a compound represented by Formula 201:

Formula 201 (M₂₁)ₐ₂₁(M₂₂)ₐ₂₂(M₂₃)ₐ₂₃

wherein, in Formula 201,
M₂₁ is a Group II element,
M₂₂ and M₂₃ may each independently be a Group VI element.
a21 to a23 may each independently be a real number from 0 to 1, and
the sum of a22 and a23 may be a real number between 0 and 1.

According to an embodiment, M₁ included in the heterofunctional ligand and M₂₁ included in the first shell may be the same element.

According to an embodiment, the first shell may be CdS, CdSe, CdTe, ZnS, ZnSe, ZnTe, ZnO, HgS, HgSe, HgTe, or a combination thereof.

According to an embodiment, the core may include Cu, In, Ga, and Se, and the first shell may include ZnS.

According to an embodiment, the thickness of the first shell may be about 0.1 nm to about 5 nm. For example, the thickness of the first shell may be about 0.2 nm to about 4 nm, about 0.2 nm to about 3 nm, about 0.4 nm to about 2 nm, or about 0.5 nm to about 1 nm.

The emission wavelength of the quantum dot may be adjusted by ensuring that the thickness of the first shell satisfies these ranges. For example, the quantum dot may not emit light having a long wavelength by ensuring that the thickness of the first shell satisfies these ranges.

According to an embodiment, the quantum dot may further include a second shell covering at least a portion of the first shell.

According to an embodiment, the second shell may include a Group II-VI compound, a Group III-V compound, a Group III-VI compound, a Group I-III-VI compound, a Group II-III-VI compound, a Group II-IV-V compound, a Group II-V compound, a Group IV-V compound, or a combination thereof.

Examples of the Group II-VI compound are: a binary compound such as CdS, CdSe, CdTe, ZnS, ZnSe, ZnTe, ZnO, HgS, HgSe, HgTe, MgSe, or MgS; a ternary compound such as CdSeS, CdSeTe, CdSTe, ZnSeS, ZnSeTe, ZnSTe, HgSeS, HgSeTe, HgSTe, CdZnS, CdZnSe, CdZnTe, CdHgS, CdHgSe, CdHgTe, HgZnS, HgZnSe, HgZnTe, MgZnSe, MgZnS; a quaternary compound such as CdZnSeS, CdZnSeTe, CdZnSTe, CdHgSeS, CdHgSeTe, CdHgSTe, HgZnSeS, HgZnSeTe, or HgZnSTe; or a combination thereof.

Examples of the Group III-V compound are: a binary compound such as GaN, GaP, GaAs, GaSb, AlN, AlP, AlAs, AlSb, InN, InP, InAs, or InSb; a ternary compound such as GaNP, GaNAs, GaNSb, GaPAs, GaPSb, AlNP, AlNAs, AlNSb, AlPAs, AlPSb, InGaP, InNP, InAlP, InNAs, InNSb, InPAs, or InPSb; a quaternary compound such as GaAlNP, GaAlNAs, GaAlNSb, GaAlPAs, GaAlPSb, GaInNP, GaInNAs, GaInNSb, GaInPAs, GaInPSb, InAlNP, InAlNAs, InAlNSb, InAlPAs, or InAlPSb; or a combination thereof. Meanwhile, the Group III-V compound may further include a Group II element. Examples of Group II-III-V compound further including a Group II element are InZnP, InGaZnP, and InAlZnP.

Examples of the Group III-VI compounds may refer to those described herein.

Examples of the Group I-III-VI compounds are a ternary compound such as AgInS, AgInS₂, CuInS, CuInS₂, CuGaO₂, AgGaO₂, or AgAlO₂; or a combination thereof.

Examples of the Group II-III-VI compound may refer to those described herein.

Examples of the Group II-IV-V compound are ZnSnP₂, ZnSnAs₂, and ZnSnSb₂.

Examples of the Group II-V compound are ZnP, ZnAs, and ZnSb.

Examples of the Group IV-VI compound are a binary compound such as SnS, SnSe, SnTe, PbSe, PbS, or PbTe; a ternary compound such as SnSeS, SnSeTe, SnSTe, SnPbS, SnPbSe, SnPbTe, PbSTe, PbSeS, or PbSeTe; a quaternary compound such as SnPbSSe, SnPbSeTe, or SnPbSTe; or a combination thereof.

According to an embodiment, the second shell may include ZnS, ZnSe, ZnTe, ZnO, ZnSeS, ZnSeTe, ZnSTe, or a combination thereof.

According to an embodiment, the thickness of the second shell may be about 0.1 nm to about 5 nm. For example, the thickness of the second shell may be about 0.2 nm to about 4 nm, about 0.2 nm to about 3 nm, about 0.4 nm to about 2 nm, or about 0.5 nm to about 1 nm.

According to an embodiment, the diameter of the nanoparticle may be about 0.5 nm to about 8 nm. For example, the diameter of the nanoparticle may be about 1 nm to about 7.5 nm, or about 2 nm to about 7 nm.

According to an embodiment, the diameter of the quantum dot may be about 1 nm to about 15 nm. For example, the diameter of the quantum dot may be about 1 nm to about 12 nm, or about 1 nm to about 10 nm.

According to an embodiment, the quantum dot may not include cadmium. Accordingly, the quantum dot does not have issues due to the high toxicity of cadmium.

According to an embodiment, the quantum dot may have a maximum emission wavelength of about 200 nm to about 800 nm.

According to an embodiment, the quantum dot may emit red light with a maximum emission wavelength of about 590 nm to about 750 nm.

According to an embodiment, the quantum dot may emit green light with a maximum emission wavelength of about 490 nm to about 590 nm.

According to an embodiment, the quantum dot may emit blue light with a maximum emission wavelength of about 410 nm to about 490 nm.

According to an embodiment, the quantum dots may emit deep blue light with a maximum emission wavelength of about 410 nm to about 465 nm.

According to an embodiment, the quantum dot may have a roundness of about 0.7 to about 0.9.

In one or more embodiments, the shape of the quantum dot is not specifically limited, and may be any one commonly used in the art. For example, the quantum dot may have the form of spherical, pyramidal, multi-arm, or cubic nanoparticles, nanotubes, nanowires, nanofibers, nanoplate-shaped particles, etc.

According to an embodiment, the quantum dot may have a full width of half maximum (FWHM) of the photoluminescence (PL) spectrum of 60 nm or less, for example, 55 nm or less, or 50 nm or less, or 40 nm or less. When the FWHM of the quantum dot satisfies these values, color purity and color reproducibility may be excellent and the wide viewing angle may be improved.

According to an embodiment, the quantum dot may have a quantum yield of 70% or more, for example, 80% or more, or 90% or more.

According to an embodiment, the quantum dot may have, after purification with ethanol, a quantum yield of 70% or more, for example, 80% or more, or 90% or more.

Method of preparing quantum dot

A method of preparing quantum dots according to an embodiment includes adding a heterofunctional ligand represented by Formula 1 to a solution containing nanoparticles.

Formula 1 M₁(X₁)(R₁)

wherein, in Formula 1,
M₁ is a metal cation,
X₁ may be a halide ion, and
R₁ is a hydrophilic group having 11 or more carbon atoms.

According to an embodiment, in the adding the heterofunctional ligand to the solution, the content of the heterofunctional ligand may be, based on 100 parts by weight of the nanoparticle, about 5 parts by weight to about 50 parts by weight, for example, about 10 parts by weight to about 30 parts by weight.

According to an embodiment, the method of preparing the quantum dot may further include heating the solution at a temperature of about 50 °C to about 90 °C. For example, the solution may be heated at a temperature of about 60°C to about 80°C.

According to an embodiment, the heating may be performed for about 30 minutes to about 3 hours. For example, the heating may be performed for about 1 hour to about 2 hours.

According to an embodiment, the method of preparing the quantum dot may further include purifying and powdering by adding an organic solvent to the solution.

According to an embodiment, the surface of the nanoparticle may be treated with an organic ligand or a metal halide.

According to an embodiment, an organic ligand is bonded to the nanoparticle, and due to the addition of the heterofunctional ligand to the solution, the organic ligand and the heterofunctional ligand may undergo ligand exchange.

According to an embodiment, the organic ligand may include a C₄-C₃₀ fatty acid.

For example, the organic ligand may include palmitic acid, palmitoleic acid, stearic acid, oleic acid, trioctylphosphine, trioctylphosphine oxide, oleylamine, octylamine, trioctyl amine, hexadecylamine, octanethiol, dodecanethiol, hexylphosphonic acid, tetradecylphosphonic acid, or octylphosphonic acid.

According to an embodiment, the metal halide may be a metal halide represented by Formula 10:

Formula 10 A^{m+}(X⁻)ₘ

wherein, in Formula 10,
Am+ may be a m-valent cation of metal, and m may be 1, 2, 3 or 4, and
X- may be a halide ion.

According to an embodiment, the metal halide may be zinc halide, indium halide, aluminium halide, gallium halide, or a combination thereof.

According to an embodiment, the metal halide may be ZnCl₂, InCl₃, AlCl₃, GaCl₃, NaCl, ZnI₂, AlI₃, GaI_{3,} or a combination thereof.

According to an embodiment, the solution may include a solvent.

According to an embodiment, the solvent may include cyclohexyl acetate, 1-octadecene (ODE), trioctylamine (TOA), trioctylphosphine (TOP), or a combination thereof.

### [Quantum dot composition]

According to an embodiment, a quantum dot composition including the quantum dot is provided.

According to an embodiment, the quantum dot composition may further include a crosslinkable monomer.

For example, the crosslinkable monomer may be 1,6-hexanediol diacrylate (HDDA), 2-ethylhexyl(meth)acrylate, ethyl(meth)acrylate, methyl(meth)acrylate, n-propyl(meth)acrylate, isopropyl(meth)acrylate, pentyl(meth)acrylate, n-octyl(meth)acrylate, isooctyl(meth)acrylate, isononyl(meth)acrylate, n-butyl(meth)acrylate, isobutyl(meth)acrylate, n-hexyl(meth)acrylate, n-nonyl(meth)acrylate, isoamyl(meth)acrylate, n-decyl(meth)acrylate, isodecyl(meth)acrylate, dodecyl(meth)acrylate, isobornyl(meth)acrylate, cyclohexyl(meth)acrylate, phenyl(meth)acrylate, benzyl(meth)acrylate, isostearyl(meth)acrylate, 2-methylbutyl(meth)acrylate, or a combination thereof.

According to an embodiment, the crosslinkable monomer may be hydrophilic.

According to an embodiment, the weight ratio of the quantum dot to the crosslinkable monomer in the quantum dot composition may be about 1:0.1 to about 1:10, about 1:0.2 to about 1:5, or about 1:0.5 to about 1:2.

According to an embodiment, the quantum dot composition may further include an initiator.

For example, the initiator may include diphenyl(2,4,6-trimethylbenzoyl)phosphine oxide, 4-acryloxybenzophenone, 2,2-dimethoxy-2-phenylacetophenone, 2-hydroxy-2-methyl-1-phenyl- 1-propan-1-one, ethyl(2,4,6-trimethylbenzoyl)phenyl phosphinate, bisacylphosphine oxide, or a combination thereof.

According to an embodiment, the viscosity (@25°C) of the quantum dot composition may be about 2 cP to about 30 cP.

When the viscosity of the quantum dot composition according to an embodiment satisfies this range, the quantum dot composition may be suitable for forming a layer using a solution process, for example, spin coating or inkjet.

According to an embodiment, the quantum dot composition may further include a solvent.

According to an embodiment, the solvent may be a hydrophilic solvent. For example, the solvent may be 1,6-hexanediol diacrylate (HDDA).

### [Electronic device]

According to an embodiment, an electronic device including the quantum dot is provided.

The quantum dot may be included in various electronic devices. For example, an electronic device including the quantum dot may be a light-emitting device, an authentication device, etc.

The electronic device (for example, a light-emitting device or a display device) may further include a light-emitting device and i) a color filter, ii) a color conversion layer, or iii) a color filter and a color conversion layer. The color filter and/or the color conversion layer may be disposed in at least one of directions in which light emitted from a light-emitting device travels. For example, light emitted from the light-emitting device may be blue light or white light. According to an embodiment, the light-emitting device may include a quantum dot. According to an embodiment, the color conversion layer may include a quantum dot. The quantum dot may be, for example, the quantum dot as described herein.

The electronic device may be applied to various displays, a light source, an illuminator, a personal computer (for example, a mobile personal computer), a mobile phone, a digital camera, an electronic notebook, an electronic dictionary, an electronic game machine, a medical apparatus (for example, an electronic thermometer, a blood pressure monitor, a blood glucose meter, a pulse measuring device, a pulse wave measuring device, an electrocardiogram display device, an ultrasonic diagnostic device, or an endoscope display device), a fish detector, various measuring devices, instruments (for example, instruments for vehicles, aircrafts, or ships), a projector, or the like.

According to an embodiment, the electronic device includes an optoelectronic device including the quantum dot, and
the optoelectronic device may be a photovoltaic device, a photodiode, a phototransistor, a photomultiplier, a photo resistor, a photo detector, a light sensitive detector, a solid-state triode, a battery electrode, a light-emitting device, a light-emitting diode, an organic light-emitting device, a quantum dot light-emitting diode, a transistor, a solar cell, a laser, or a diode injection laser.

According to an embodiment, provided is an electronic device 200 including: a light source 220; and a color conversion member 230 disposed in a path of light emitted from the light source 220, wherein the quantum dot is included in the color conversion member 230.

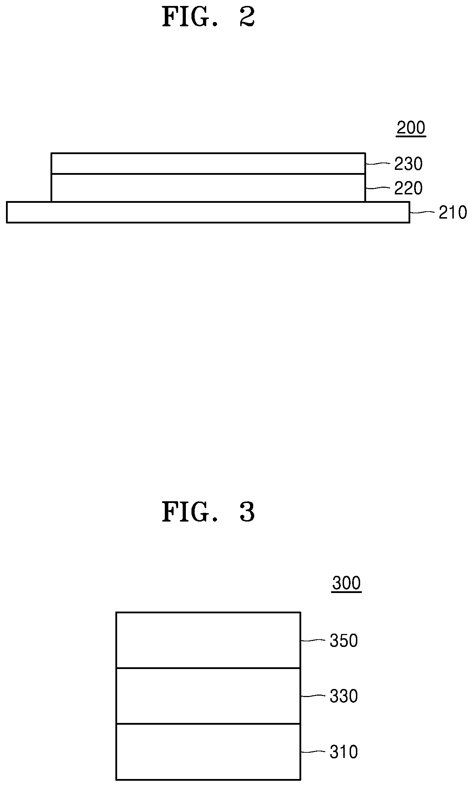

FIG. 2 is a diagram briefly illustrating the structure of the electronic device 200 according to the embodiment. The electronic device 200 of FIG. 2 includes: a substrate 210; the light source 220 disposed on the substrate 210; and the color conversion member 230 disposed on the light source 220.

For example, the light source 220 may be a back light unit (BLU) used in a liquid crystal display (LCD), a fluorescent lamp, a light-emitting device, an organic light-emitting device, a quantum dot light-emitting device (QLED), or a combination thereof. The color conversion member 230 may be arranged in at least one of directions in which light emitted from the light source 220 travels.

At least one region of the color conversion member 230 of the electronic device 200 may include the quantum dot, and the region absorbs light emitted from the light source and emits blue light with a maximum emission wavelength in the range of about 410 nm to about 490 nm.

That the color conversion member 230 is arranged in at least one of directions in which the light emitted from the light source 220 travels, does not exclude other elements from being further included between the color conversion member 230 and the light source 220.

For example, a polarizer, a liquid crystal layer, a light guide plate, a diffusion plate, a prism sheet, a microlens sheet, a brightness enhancement sheet, a reflective film, a color filter, or a combination thereof may be placed between the light source 220 and the color conversion member 230.

As another example, a polarizer, a liquid crystal layer, a light guide plate, a diffusion plate, a prism sheet, a microlens sheet, a brightness enhancement sheet, a reflective film, a color filter, or a combination thereof may be additionally disposed on the color conversion member 230.

The light source may be a backlight unit (BLU) for use in liquid crystal displays (LCD), a fluorescent lamp, a light-emitting diode (LED), an organic light-emitting device (OLED), or a quantum-dot light-emitting device (QLED), but embodiments are not limited thereto.

The light emitted from the light source as described above may be light-converted while passing through the quantum dot 10. For example, the quantum dot 10 may absorb the first light emitted from the light source and emit a visible light different from the first light. For example, the quantum dot 10 may absorb ultraviolet (UV) light emitted from the light source and emit visible light having a maximum emission wavelength of about 410 nm to about 750 nm. In an embodiment, the quantum dot 10 may absorb blue light emitted from the light source and emit visible light having a maximum emission wavelength of about 495 nm to about 750 nm. Accordingly, the quantum dot 10 or a color conversion member including the quantum dot 10 may be designed to absorb UV light or blue light emitted from a light source and emit wavelengths of various color ranges.

In an embodiment, the quantum dot 10 may absorb blue light emitted from the light source and emit green light having a maximum emission wavelength of about 495 nm to about 570 nm. For example, the quantum dot 10 may absorb blue light emitted from the light source and emit a red light having a maximum emission wavelength in a range of about 630 nm to about 750 nm.

Accordingly, the quantum dot 10 or a color conversion member including the quantum dot 10 may absorb light emitted from a light source and produce blue, green, or red colors with high brightness and high color purity.

The electronic device 200 shown in FIG. 2 is an example of a device that satisfies the embodiment, and may have various known configurations, and to this end, may additionally include various known configurations.

In other embodiments, the electronic device may include a structure including a light source, a light guide plate, a color conversion member, a first polarizing plate, a liquid crystal layer, a color filter, and a second polarizing plate that are sequentially arranged.

In still other embodiments, the electronic device may include a structure including a light source, a light guide plate, a first polarizing plate, a liquid crystal layer, a second polarizing plate, and a color conversion member that are sequentially arranged.

In the embodiments described above, the color filter may include a pigment or a dye. In the embodiments described above, one of the first polarizing plate and the second polarizing plate may be a vertical polarizing plate, and the other one may be a horizontal polarizing plate.

In other embodiments, the quantum dot as described in the present specification may be used as an emitter. According to another embodiment, provided is an electronic device including a light-emitting device that includes: a first electrode; a second electrode facing the first electrode; and an emission layer arranged between the first electrode and the second electrode, wherein the light-emitting device (for example, the emission layer of the light-emitting device) includes the quantum dot. The light-emitting device may further include a hole transport region between the first electrode and the emission layer, an electron transport region between the emission layer and the second electrode, or a combination thereof.

FIG. 3 schematically shows a cross-sectional view of a light-emitting device 300 according to an embodiment. The light-emitting device 300 may include a first electrode 310, an interlayer 330, and a second electrode 350.

The interlayer 330 may disposed on the first electrode 310. The interlayer 330 includes an emission layer.

The interlayer 330 may further include a hole transport region disposed between the first electrode 310 and the emission layer and an electron transport region disposed between the emission layer and the second electrode 350.

In addition to the quantum dot 10, the interlayer 330 may further include metal-containing compounds such as organometallic compounds, various organic materials, etc.

The hole transport region and the electron transport region may respectively include hole transporting materials and/or electron transporting materials commonly used in organic light-emitting devices.

Meanwhile, the interlayer 330 may include i) two or more emitting units sequentially stacked between the first electrode 310 and the second electrode 350, and ii) a charge generation layer disposed between the two emitting units. When the interlayer 330 includes the emitting unit and the charge generation layer as described above, the light-emitting device 300 may be a tandem light-emitting device.

The emission layer may be a quantum dot single layer or a structure in which two or more quantum dot layers are stacked. For example, the emission layer may be a quantum-dot single layer or a multilayer structure in which 2 to 100 quantum dot layers are stacked.

The emission layer may include the quantum dot as described herein.

The emission layer may further include a different quantum dot in addition to the quantum dot as described herein.

The emission layer may further include, in addition to the quantum dot as described herein, a dispersion medium in which the quantum dots are dispersed in a naturally coordinated form. The dispersion medium may include an organic solvent, a polymer resin, or a combination thereof. The dispersion medium may be any transparent medium that does not affect the optical performance of the quantum dot, is not deteriorated by light, does not reflect light, or does not absorb light. For example, the organic solvent may include toluene, chloroform, ethanol, octane, or a combination thereof, and the polymer resin may include epoxy resin, silicone resin, polystyrene resin, acrylate resin, or a combination thereof.

The emission layer may be formed by coating, on the hole transport region, a quantum dot-containing composition for forming the emission layer, and volatilizing a portion or more of the solvent from the composition for forming the emission layer.

For example, water, hexane, chloroform, toluene, octane, etc. may be used as solvents included in the composition for forming the emission layer.

The coating of the composition for forming the emission layer may be performed using a spin coat method, a casting method, a micro gravure coating method, a gravure coating method, a bar coating method, a roll coating method, a wire bar coating method, a dip coating method, a spray coating method, a screen printing method, a flexographic method, an offset printing method, an ink jet printing method, or the like.

When the light-emitting device 300 is a full-color light-emitting device, the emission layer may include an emission layer that emits light of different colors for each subpixel.

In one or more embodiments, the emission layer may be patterned, for each subpixel, as a first color emission layer, a second color emission layer, and a third color emission layer. Here, at least one emission layer of the emission layers described above may essentially include the quantum dot. In particular, the first-color emission layer may be a quantum-dot emission layer including the quantum dot, and the second-color emission layer and the third-color emission layer may be organic emission layers including organic compounds, respectively. In this regard, the first color through the third color are different colors, and for example, the first color through the third color may have different maximum emission wavelengths. The first color through the third color may be white when combined with each other.

In one or more embodiments, the emission layer may further include a fourth color emission layer, and at least one emission layer of the first color to fourth color emission layers may be a quantum dot emission layer including the quantum dot, and the remaining emission layers may be organic emission layers including organic compounds, respectively. Other various modifications are possible. In this regard, the first color through the fourth color are different colors, and for example, the first color through the fourth color may have different maximum emission wavelengths. The first color through the fourth color may be white when combined with each other.

Alternatively, the light-emitting device 300 may have a structure in which two or more emission layers emitting light of the same or different colors are stacked in contact with or spaced apart from each other. At least one emission layer of the at least two emission layers may be a quantum dot emission layer including the quantum dots, and the other emission layer may be an organic emission layer including organic compounds. Such a variation may be made. In some embodiments, the light-emitting device 300 may include a first color emission layer and a second color emission layer, where the first color and the second color may be the same color or different colors. More particularly, the first color and the second color may be both blue.

In addition to quantum dots, the emission layer may further include one or more types selected from organic compounds and compounds.

In detail, the organic compound may include a host and a dopant. The host and the dopant may include a host and a dopant that are commonly used in organic light-emitting devices, respectively.

In particular, the semiconductor compound may be an organic and/or inorganic perovskite.

The electronic device (for example, the light-emitting device may further include i) a color filter, ii) a color conversion layer, or iii) a color filter and a color conversion layer in addition to the light-emitting device. The color filter and/or the color conversion layer may be disposed in at least one traveling direction of light emitted from the light-emitting device. For example, light emitted from the light-emitting device may be blue light or white light. For a description of the light-emitting device, reference may be made to those described above. According to an embodiment, the color conversion layer may include a quantum dot. The quantum dot may be, for example, the quantum dot as described herein.

The electronic device may include a first substrate. The first substrate may include a plurality of subpixel regions, the color filter may include a plurality of color filter regions corresponding to the plurality of subpixel regions, respectively, and the color conversion layer may include a plurality of color conversion regions corresponding to the plurality of subpixel regions, respectively.

A pixel defining layer may be disposed between the plurality of subpixel regions to define each subpixel region.

The color filter may further include a plurality of color filter regions and light blocking patterns disposed between the plurality of color filter regions, and the color conversion layer may further include a plurality of color conversion regions and light blocking patterns disposed between the plurality of color conversion regions.

The plurality of color filter regions (or the plurality of color conversion regions) may include a first region configured to emit first color light, a second region configured to emit second color light, and/or a third region configured to emit third color light, and the first color light, the second color light, and/or the third color light may have different maximum emission wavelengths. For example, the first color light may be red light, the second color light may be green light, and the third color light may be blue light. For example, the plurality of color filter regions (or the plurality of color conversion regions) may include quantum dots. Specifically, the first region may include a red quantum dot, the second region may include a green quantum dot, and the third region may not include a quantum dot. For a description of the quantum dot, reference may be made to those described herein. Each of the first region, the second region, and/or the third region may further include a scatterer.

For example, the light-emitting device may be configured to emit first light, the first region may be configured to absorb the first light to emit first-1 color light, the second region may be configured to absorb the first light to emit second-1 color light, and the third region may be configured to absorb the first light to emit third-1 color light. In this case, the first-1 color light, the second-1 color light, and the third-1 color light may have different maximum emission wavelengths. In some embodiments, the first light may be blue light, the first-1 color light may be red light, the second-1 color light may be green light, and the third-1 color light may be blue light.

The electronic device may further include a thin film transistor in addition to the light-emitting device described above. The thin-film transistor may include a source electrode, a drain electrode, and an active layer, wherein any one of the source electrode and the drain electrode may be electrically connected to any one of the first electrode and the second electrode of the light-emitting device.

The thin-film transistor may further include a gate electrode, a gate insulating film, and the like.

The active layer may include crystalline silicon, amorphous silicon, an organic semiconductor, an oxide semiconductor, or the like.

The electronic device may further include an encapsulation unit configured to seal the light-emitting device. The encapsulation unit may be disposed between the color filter and/or color conversion layer and the light-emitting device. The encapsulation unit may allow light from the light-emitting device to be emitted to the outside and concurrently may block external air and moisture from permeating into the light-emitting device. The encapsulation unit may be an encapsulation substrate including a transparent glass substrate or a plastic substrate. The encapsulation unit may be a thin film encapsulation layer including at least one layer of an organic layer and/or an inorganic layer. When the encapsulation unit is a thin film encapsulation layer, the electronic device may be flexible.

In addition to the color filter and/or the color conversion layer, various functional layers may be additionally disposed on the encapsulation unit according to the use of the electronic device. Examples of the functional layer may include a touch screen layer, a polarization layer, and the like. The touch screen layer may be a resistive touch screen layer, a capacitive touch screen layer, or an infrared touch screen layer. The authentication device may be, for example, a biometric authentication device that identifies an individual by using biometric information of a living body (e.g., a fingertip, a pupil, or the like).

The authentication device may further include a biometric information collecting unit in addition to the light-emitting device described above.

The electronic device may be applied to various displays, a light source, an illuminator, a personal computer (for example, a mobile personal computer), a mobile phone, a digital camera, an electronic notebook, an electronic dictionary, an electronic game machine, a medical device (for example, an electronic thermometer, a blood pressure monitor, a blood glucose meter, a pulse measuring device, a pulse wave measuring device, an electrocardiogram display device, an ultrasonic diagnostic device, or an endoscope display device), a fish detector, various measuring devices, instruments (for example, instruments for vehicles, aircrafts, or ships), a projector, or the like.

Hereinafter, quantum dots and methods of preparing according to embodiments will be described in more detail through examples.

### [Examples]

### Synthesis Example 1: Synthesis of Heterofunctional Ligand

Deionized water (DI) containing 5 wt% of NaOH was added to a 15 v/v% mPEG5-COOH (in ethanol) solution and stirred at 25 °C until the pH reached 7 to obtain Na(COO-PEG5m)₂.

The compound [Na(COO-PEG5m)₂] obtained above was purified and then, mixed with zinc chloride at a molar ratio of 1:1 in a mixed solution including 80 ml of ethanol, 60 ml of DI water, and 140 ml of hexane. The resultant solution was stirred at a temperature of 70 °C for 4 hours to obtain the heterofunctional ligand ZnCl(COO-PEG₅-CH₃). (Yield: 29%)

### Example 1: Preparation of InP/ZnSeS core quantum dots including heterofunctional ligand

ZnCl(COO-PEG5-CH₃) heterofunctional ligand synthesized in Synthesis Example 1 was added to 34 wt% of InP/ZnSeS nanoparticle solution (in cyclohexyl acetate) at 10 wt%, 20 wt%, or 30 wt% based on the nanoparticle, and heated at a temperature of 70 °C for 1 hour to perform a ligand exchange reaction. Afterwards, the reaction mixture was purified using hexane and powdered to prepare the quantum dot of Example 1.

### Comparative Example 1

A nanoparticle solution that had not been subjected to the ligand exchange reaction, was prepared as a quantum dot of Comparative Example 1.

### Comparative Examples 2 to 4

Quantum dots of Comparative Examples 2 to 4 were prepared in substantially the same manner as in Example 1, except that the ligands listed in Table 1 were used instead of the heterofunctional ligands.

### Evaluation Example 1

The luminescence efficiency (%) of each of the quantum dots of Example 1 and Comparative Examples 1 to 4, and dispersibility thereof in 1,6-hexanediol diacrylate (HDDA) were evaluated. Results are shown in Table 1.

Luminescence efficiency was measured using Otsuka Electronics' QE-2100 equipment by applying blue light of 450 nm and measuring the number of photons emitted compared to the number of photons absorbed. Dispersibility with respect to HDDA was evaluated by dissolving QD at 30 wt% and visually evaluating the degree of turbidity. Depending on the degree of dispersion, the evaluation results were marked as follows: if no dispersion occurs, "X," if partially dispersed, "△," and if completely dispersed, "O".

**[Table 1]**

| | Ligands used for ligand exchange | Relative weight of ligand to nanoparticle | | | | | |
|---|---|---|---|---|---|---|---|
| | | 10 wt% | | 20 wt% | | 30 wt% | |
| | | Luminescence efficiency (%) | HDDA Dispersion | Luminescence efficiency (%) | HDDA Dispersion | Luminescence efficiency (%) | HDDA Dispersion |
| Example 1 | ZnCl(COO-PEG5-CH₃) | 91.2% | Δ | 90.7% | ○ | 91.6% | ○ |
| Comparative Example 1 | - | 91.7% | X | 91.7% | X | 91.7% | X |
| Comparative Example 2 | ZnCl₂ | Agglomeration occurs | X | Agglomeration occurs | X | Agglomeration occurs | X |
| Comparative Example 3 | mPEG5-COOH | 90.8% | X | 89.0% | Δ | 89.3% | ○ |
| Comparative Example 4 | ZnCl₂, mPEG5-COOH Mix (1:1) | 91.7% | X | 91.2% | X | Agglomeration occurs | X |

With reference to Table 1 above, it was found that the quantum dot according to an embodiment was excellent in both luminescence efficiency and dispersibility. In particular, compared to Comparative Example 1, which was a crude quantum dot that did not undergo a ligand exchange reaction, the luminescence efficiency was not decreased significantly, indicating that almost no surface defects were created by the ligand exchange reaction, which was used to obtain dispersibility.

### Example 2: Preparation of CIGS/ZnS core quantum dot with heterofunctional ligands

Quantum dots of Example 2 were prepared in substantially the same manner as Example 1, except that CIGS/ZnS nanoparticle solution was used instead of InP/ZnSeS.

### Comparative Example 5

A CIGS/ZnS nanoparticle solution that had not been subjected to a ligand exchange reaction, was prepared using the quantum dot of Comparative Example 5.

### Comparative Examples 6 to 8

Quantum dots of Comparative Examples 6 to 8 were prepared in substantially the same manner as Example 2, except that the ligands listed in Table 2 were used instead of the heterofunctional ligands.

### Evaluation Example 2

For each of the quantum dots of Example 2 and Comparative Examples 5 to 8, the luminescence efficiency (%) and dispersibility in 1,6-hexanediol diacrylate (HDDA) were evaluated in the same manner as in Evaluation Example 1. Results thereof are shown in Table 2.

**[Table 2]**

| | Ligands used for ligand exchange | Relative weight of ligand to nanoparticle | | | | | |
|---|---|---|---|---|---|---|---|
| | | 10 wt% | | 20 wt% | | 30 wt% | |
| | | Luminescence efficiency (%) | HDDA Dispersion | Luminescence efficiency (%) | HDDA Disper sion | Luminescence efficiency (%) | HDDA Dispersion |
| Example 2 | ZnCl(COO-PEG5-CH₃) | 85.2% | Δ | 86.3% | ○ | 87.2% | ○ |
| Comparative Example 5 | - | 85% | X | 85% | X | 85% | X |
| Comparative Example 6 | ZnCl₂ | Agglomeratio n occurs | X | Agglomeration occurs | X | Agglomeration occurs | X |
| Comparative Example 7 | mPEG5-COOH | 83.2% | X | 81.3% | Δ | 78.1% | ○ |
| Comparative Example 8 | ZnCl₂, mPEG5-COOH Mix (1:1) | 85.8% | X | Agglomeration occurs | X | Agglomeration occurs | X |

Referring to Table 2, it was found that the quantum dot according to an embodiment was excellent in both luminescence efficiency and dispersibility. In particular, the increase in the luminescence efficiency of Example 2 compared to Comparative Example 5, which relates to a crude quantum dot which had not been subjected to the ligand exchange reaction, shows that: almost no surface defects were created by the ligand exchange reaction, which is used to obtain dispersibility; and aggregation of CIGS quantum dots due to small size was prevented by ligand exchange reaction and thus, chemical stability and photoluminescence properties were increased.

### Example 3 and Comparative Examples 9 to 10

Quantum dots of Example 3 and Comparative Examples 9 and 10 were prepared in substantially the same manner as Example 2, except that the ligands listed in Table 3 were used instead of the heterofunctional ligands.

### Evaluation Example 3

For each of the quantum dots of Examples 2 and 3 and Comparative Examples 9 and 10, the luminescence efficiency (%) and dispersibility in 1,6-hexanediol diacrylate (HDDA) were evaluated in the same manner as in Evaluation Example 1. Results thereof are shown in Table 3.

**[Table 3]**

| | | Relative weight of ligand to nanoparticle | | | | | |
|---|---|---|---|---|---|---|---|
| | | 10 wt% | | 20 wt% | | 30 wt% | |
| | Ligands used for ligand exchange | Luminescence efficiency (%) | HDDA Dispersion | Luminescence efficiency (%) | HDDA Dispersion | Luminescence efficiency (%) | HDDA Dispersion |
| Example 2 | ZnCl(COO-PEG5-CH₃) | 85.2% | Δ | 86.3% | ○ | 87.2% | ○ |
| Example 3 | ZnCl(COO-PEG6-CH₃) | 85.3% | Δ | 85.4% | ○ | 86% | ○ |
| Comparat ive Example 9 | ZnCl(COO-PEG3-CH₃) | 86.2% | X | 87.1% | X | 88 % | X |
| Comparative Example 10 | ZnCl(COO-PEG4-CH₃) | 85.8% | X | 86.0% | Δ | 86.8% | Δ |

With reference to Table 3, it was found that the quantum dot according to an embodiment was excellent in both luminescence efficiency and dispersibility. In particular, in the case of Comparative Examples 9 and 10, it was found that despite the use of heterofunctional ligands, the dispersibility was poor due to the inclusion of a hydrophilic group having less than 11 carbon atoms.

## Claims

1. A quantum dot comprising:
a nanoparticle; and
a heterofunctional ligand bonded to a surface of the nanoparticle and represented by Formula 1:
Formula 1 M₁(X₁)(R₁)
wherein, in Formula 1,
M₁ is a metal cation,
X₁ is a halide ion, and
R₁ is a hydrophilic group having 11 or more carbon atoms.

2. The quantum dot of claim 1, wherein
M₁ is a cation of Zn, Cu, In, Ga, Cr, Mn, Fe, Co, Ni, Mg, Ca, Sc, Sn, Ti, V, Sr, Y, Zr, Nb, Mo, Cd, Ba, Au, Hg, Tl, or a combination thereof.

3. The quantum dot of claim 1, wherein
X₁ is Cl- or Br-.

4. The quantum dot of claim 1, wherein
R₁ is a group represented by Formula 11:
Formula 11 *-L₁-(R₁₁)ₙ₁-T₁
wherein, in Formula 11,
L₁ is a linking group,
R₁₁ is a hydrophilic unit,
n1 is an integer selected from 1 to 1,000,
T₁ is a terminal group, and
* indicates a binding site to M₁ in Formula 1.

5. The quantum dot of claim 4, wherein
L₁ is a single bond, an ester group (-COO-), a carbonyl group (-CO-), an amide group (-C(=O)N-), an ether group (-O-), a sulfide group (-S-), a sulfoxide group (-SO-), a sulfonyl group (-SO₂-), or a combination thereof.

6. The quantum dot of claim 4, wherein
R₁₁ includes at least one of a repeating unit represented by Formula 11-1 and a repeating unit represented by Formula 11-2: 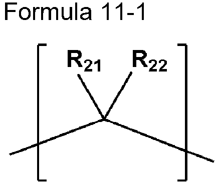 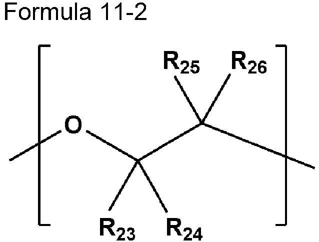
wherein, in Formulae 11-1 and 11-2,
R₂₁ to R₂₆ are each independently hydrogen, deuterium, -F, -Cl, -Br, -I, a hydroxy group, a substituted or unsubstituted C₁-C₆₀ alkyl group, a substituted or unsubstituted C₂-C₆₀ alkenyl group, a substituted or unsubstituted C₂-C₆₀ alkynyl group, a substituted or unsubstituted C₁-C₆₀ alkoxy group, a substituted or unsubstituted C₃-C₁₀ cycloalkyl group, a substituted or unsubstituted C₁-C₁₀ heterocycloalkyl group, a substituted or unsubstituted C₃-C₁₀ cycloalkenyl group, a substituted or unsubstituted C₁-C₁₀ heterocycloalkenyl group, a substituted or unsubstituted C₆-C₆₀ aryl group, a substituted or unsubstituted C₆-C₆₀ aryloxy group, a substituted or unsubstituted C₆-C₆₀ arylthio group, a substituted or unsubstituted C₁-C₆₀ heteroaryl group, a substituted or unsubstituted C₁-C₆₀ heteroaryloxy group, a substituted or unsubstituted C₁-C₆₀ heteroarylthio group, a substituted or unsubstituted monovalent non-aromatic condensed polycyclic group, or a substituted or unsubstituted monovalent non-aromatic heterocondensed polycyclic group.

7. The quantum dot of claim 4, wherein
T₁ is hydrogen, deuterium, -OR₃₁, -COOR₃₁, -N(R₃₁)(R₃₂), -S(R₃₁), or a C₁-C₂₀ alkyl group, and
R₃₁ and R₃₂ are each independently hydrogen, deuterium, or a C₁-C₂₀ alkyl group.

8. The quantum dot of claim 1, wherein
the heterofunctional ligand represented by Formula 1 is represented by Formula 21: 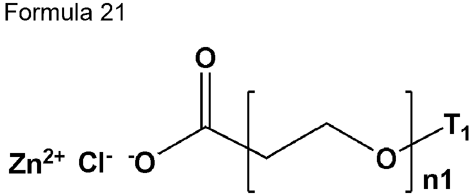
wherein, in Formula 21,
T₁ is hydrogen, deuterium, -OR₃₁, -COOR₃₁, -N(R₃₁)(R₃₂), -S(R₃₁), or a C₁-C₂₀ alkyl group,
R₃₁ and R₃₂ are independently hydrogen, deuterium, or a C₁-C₂₀ alkyl group, and
n1 is an integer from 5 to 1,000.

9. The quantum dot of claim 1, wherein
the nanoparticle includes a core, and
the core includes a Group I-III-VI compound.

10. The quantum dot of claim 2, wherein
the nanoparticle further includes a first shell covering at least a portion of the core, and
the first shell is a Group II-VI compound, a Group III-V compound, a Group III-VI compound, a Group I-III-VI compound, a Group II-IV-V compound, a Group II-V compound, a Group IV-V compound, or a combination thereof.

11. The quantum dot of claim 10, wherein
the core includes Cu, In, Ga, and Se, and
the first shell includes ZnS.

12. The quantum dot of claim 1, wherein
the nanoparticle has a diameter of about 0.5 nm to about 7 nm.

13. A method of preparing a quantum dot, the method comprising adding a heterofunctional ligand represented by Formula 1 to a solution including a nanoparticle:
Formula 1 M₁(X₁)(R₁)
wherein, in Formula 1,
M₁ is a metal cation,
X₁ is a halide ion, and
R₁ is a hydrophilic group having 11 or more carbon atoms.

14. The method of claim 13, wherein
an organic ligand is bonded to the nanoparticle, and
due to the adding of the heterofunctional ligand to the solution, the organic ligand and the heterofunctional ligand undergo ligand exchange.

15. The method of claim 13, wherein
in the adding the heterofunctional ligand to the solution,
a content of the heterofunctional ligand is about 10 parts by weight to about 30 parts by weight, based on 100 parts by weight of the nanoparticle.

16. The method of claim 13, further comprising
purifying and powdering the solution by adding an organic solvent to the solution.

17. A quantum dot composition comprising the quantum dot according to any
one of claims 1 to 12.

18. The quantum dot composition of claim 17, further comprising
a crosslinkable monomer and an initiator.

19. An electronic device comprising the quantum dot of any one of claims 1 to 12.

20. The electronic device of claim 19, wherein
the electronic device comprises an optoelectronic device including the quantum dot, and
the optoelectronic device is a photovoltaic device, a photodiode, a phototransistor, a photomultiplier, a photo resistor, a photo detector, a light sensitive detector, a solid-state triode, a battery electrode, a light-emitting device, a light-emitting diode, an organic light-emitting device, a quantum dot light-emitting diode, a transistor, a solar cell, a laser, or a diode injection laser.
